# EUROPÄISCHE PATENTSCHRIFT

(11) **EP 1 288 420 B1**
(45) Veröffentlichungstag und Bekanntmachung des Hinweises auf die Patenterteilung: **19.05.2004**
(21) Anmeldenummer: 02014405.1
(22) Anmeldetag: 28.06.2002
(51) Int. Cl.: E05F 15/00, B60J 10/00

(54) **Türspaltabdichtung**
Door sealing device
Dispositif d'étanchéité de portes

(30) Priorität: 31.08.2001 DE 10142761
(43) Veröffentlichungstag der Anmeldung: 05.03.2003
(73) Patentinhaber: HÜBNER GmbH, 34123 Kassel (DE); Stadtwerke München GmbH, 80287 München (DE)
(72) Erfinder: Just, Kai, 34132 Kassel (DE); Pogorelow, Wjatscheslaw, 34537 Bad Wildungen (DE)
(74) Vertreter: WALTHER, WALTHER & HINZ Patentanwälte

(56) Entgegenhaltungen:
- EP-A- 0 835 781
- DE-U- 9 306 553
- DE-U- 9 406 445
- DE-U- 29 808 292
- US-A- 4 045 631

## Beschreibung

Die vorliegende Erfindung betrifft eine Türspaltabdichtung, insbesondere für eine Fahrzeugtür, mit mindestens einem Fingerschutzprofil, wobei das Fingerschutzprofil stirnseitig eine längsverlaufende Kammer aufweist.

Fingerschutzprofile an Türen, insbesondere an Fahrzeugtüren dienen dazu, sicherzustellen, dass, wenn sich Personen innerhalb einer sich schließenden Tür befinden, diese Tür quasi wieder automatisch in Offenstellung geht. Das heißt, an dem Fingerschutzprofil sind entsprechende Sensoren elektrischer oder pneumatischer Art vorgesehen, die die Türöffnung dann bewirken, wenn sich in der sich schließenden Tür ein Gegenstand befindet. Zur Öffnung der Tür sind nun in Bezug auf die Ausbildung des Fingerschutzprofiles verschiedene Varianten bekannt. Nach einer Variante ist vorgesehen, dass durch einen Gegenstand zwischen den beiden Türen oder zwischen Tür und Rahmen eine Hohlkammer im Fingerschutzprofil gestaucht wird, mit der Folge, dass sich eine pneumatische Druckwelle ausbildet, die von einem sogenannten Druckwellenschalter erfasst wird. Durch den Druckwellenschalter erhält der Pneumatikantrieb für die Tür das Signal zur Wiederöffnung der Tür.

Bei der elektrischen Variante des Fingerschutzprofiles mit einer elektrisch arbeitenden Sicherheitschaltleiste wird bei Verformung der Hohlkammer mechanisch Druck auf die Schaltleiste ausgeübt, mit der Folge, dass durch den Druck auf die Schaltleiste ein elektrischer Kontakt geschlossen wird, wodurch der Pneumatikantrieb für die Tür entsprechend aktiviert wird.

Diese bekannten Türspaltabdichtungen mit Fingerschutzprofilen, die entweder elektrischer oder aber pneumatischer Natur sind, arbeiten an sich sehr zuverlässig, wenn Personen zwischen den Türen eingeklemmt werden bzw. wenn auch nur eine Person mit einer Hand oder einem Finger durch die Türspaltabdichtung bzw. durch die Fingerschutzprofile eingeklemmt wird. Problematisch sind die bekannten Türspaltabdichtungen allerdings dann, wenn lediglich Stoffreste durch die Türspaltabdichtung eingeklemmt werden. In einem solchen Fall ist die Verformung bei den bekannten Türspaltabdichtungen bzw. Fingerschutzprofilen nicht derart, dass es zu einer Aktivierung, beispielsweise einer elektrischen Schaltleiste kommt.

So ist zum Beispiel aus dem DE 298 08 292 ein Fingerschutzprofil bekannt, das eine Kammer mit einer elektrischen Schaltleiste aufweist, wobei die Kammer im Bereich des Grundes des Profiles d.h. von der Stirnseite nach hinten versetzt im Profil angeordnet ist. Darüber hinaus zeigt das Profil eine über das Profil überstehende Dichtlippe auf. Dieses bekannte Profil ist nicht in der Lage, bei nur geringfügigen Verformungen, wie es beispielsweise der Fall ist, wenn ein Stück Stoff oder eine Hundeleine durch das Profil eingeklemmt ist, die Schaltleiste auszulösen.

Gleiches gilt für die DE 94 06 445.8 insofern, als dort ebenfalls Fingerschutzprofile mit Dichtlippen vorgesehen sind, die über die Kammer mit dem Schaltglied vorstehen.

Anders stellt sich der Stand der Technik bei Betrachtung der DE 93 06 553 dar; dies insofern, als dort zwar ein Fingerschutzprofil mit einer Kammer gezeigt ist, das ein Schaltglied aufweist, jedoch zeigt dieses Profil keine Dichtlippe.

Ähnliches gilt auch für das US Patent 4,045,631, wobei dort eine Dichtlippe im eigentlichen Sinn nicht erkennbar ist. Dort ist lediglich ein Fingerschutzprofil mit einem Profilkörper dargestellt, wobei der Profilkörper eine Art Ausleger aufweist, an dessen stimseitigen äußeren Ende eine Kammer mit einem Schaltglied vorgesehen ist, jedoch zeigt dieses Fingerschutzprofil - wie bereits ausgeführt - keine gesonderte Dichtlippe.

Der Erfindung liegt daher die Aufgabe zu Grunde, eine Türspaltabdichtung der eingangs genannten Art zu schaffen mit mindestens einer Dichtlippe, bei der es selbst bei kleinsten Verformungen zu einer Auslösung des Schaltmechanismusses kommt, mithin die Tür wieder geöffnet wird.

Die Aufgabe wird erfindungsgemäß durch die Merkmale des Anspruches 1 gelöst. Durch diese Konstruktion wird demzufolge erreicht, dass die Kammer unmittelbar von dem Gegenstand, der durch die Tür eingeklemmt wird, gequetscht wird, so dass selbst Gegenstände mit geringer Dicke, wie beispielsweise der Stoff eines Mantels, ausreichend sind, um einen Schaltvorgang durch das in der Kammer angeordnete Schaltglied im Sinne einer Öffnung der Tür auslösen zu können.

Nach einem besonderen Merkmal ist die Kammer am Profilkörper in seitlicher Richtung schwenkbeweglich angeordnet, so dass die Kammer, wenn Druck auf sie ausgeübt wird, seitlich ausweichen kann und hierdurch unmittelbar in Kontakt mit dem Schaltglied gelangt.

Die Kammer ist im Querschnitt vorteilhaft nach Art eines Omegas ausgebildet, wobei insbesondere durch eine solche Form mit aufeinander zulaufenden seitlichen Schenkeln des die Kammer bildenden Mantels, die Schwenkbeweglichkeit in seitlicher Richtung gewährleistet ist. Um insbesondere zu gewährleisten, dass auch geringe, auf die Kammer von außen einwirkende Kräfte ein Schaltsignal auslösen, zeigt die Kammer auf ihrer Innenseite mindestens einen Noppen oder eine Druckleiste zur Betätigung des Schaltgliedes. Die Verwendung derartiger Noppen bzw. Druckleisten hat den Vorteil, dass diese selbst bei geringfügiger Belastung der Kammer von außen erhebliche Drücke auf das Schaltglied ausüben können. Dem gleichen Ziel dient auch die Maßnahme, eine Materialschwächung des Mantels im Bereich der seitlichen Wandung der Kammer vorzusehen, um eine Deformation in Richtung auf den Profilkörper zu erleichtern, mithin "einen" Schaltvorgang selbst bei geringerfügiger Verformung zu gewährleisten.

Gegenstand der Erfindung ist ebenfalls eine Türspaltabdeckung, die ein weiteres dem ersten Fingerschutzprofil gegenüberliegendes, zweites Fingerschutzprofil aufweist, wobei dieses zweite Fingerschutzprofil eine Andruckfläche für die Kammer des ersten Fingerschutzprofiles aufweist. Durch die Bereitstellung einer solchen Andruckfläche, deren Abstand von der Außenseite des Mantels der Kammer des ersten Fingerschutzprofiles einstellbar ist, kann demzufolge definierbar die Verformung eingestellt werden, bei der ein Ansprechen des Schaltgliedes erfolgen soll. Zur Führung der Kammer kann die Andruckfläche eine Wölbung entsprechend der Außenkontur der Kammer aufweisen.

Nach einem besonderen Merkmal ist vorgesehen, dass das zweite Fingerschutzprofil eine Kammer zur Aufnahme eines Schaltgliedes aufweist. Durch die Anordnung eines Schaltgliedes in diesem zweiten Fingerschutzprofil wird eine Erhöhung der Sicherheit insofern bewirkt, als dann selbst bei Ausfall eines Schaltgliedes die Funktionsfähigkeit der Türspaltabdichtung nicht wesentlich vermindert ist.

Vorteilhaft sind von der Andruckfläche auf die Kammer konisch zulaufend zwei Stege vorgesehen, wobei die Stegenden bis in die Kammer hineinragen. Diese Stegenden kommen schlussendlich bei Verformung dieses zweiten Fingerschutzprofiles in Kontakt mit dem Schaltglied und lösen den bereits zuvor erwähnten Schaltvorgang aus. Insbesondere durch die Ausbildung der Stege bzw. der Stegenden als Auslöser für den Schaltvorgang wird erreicht, dass selbst kleine Drücke auf die Andruckfläche ausreichend sind, um den Schaltvorgang bei dem Schaltglied auslösen zu können, da selbst kleine Verformungen auf Grund der geringen Oberfläche der Stegenden eine relativ gesehen große Kraft auf das Schaltglied aufzubringen vermögen.

Vorteilhaft wird durch die Stege ein Hohlraum gebildet, in den ein Füllkörper einsetzbar ist. Ein solcher Füllkörper hat den Vorteil, dass bei Verformung des Profilkörpers die Verformung wesentlich unmittelbarer durch die Stege auf das Schaltglied übertragen wird.

Beiden Fingerschutzprofilen ist gemein, dass das Schaltglied als elektrische Schaltleiste ausgebildet ist, wobei sich diese Schaltleiste parallel zur Längsachse der jeweiligen Kammer des Fingerschutzprofiles erstreckt. Beiden Fingerschutzprofilen ebenfalls gemein ist, dass der Profilkörper stirnseitig seitlich am Profilkörper angeordnet mindestens eine, vorzugsweise jedoch zwei, einander gegenüberliegende Dichtlippen aufweist. Das heißt, dass in Bezug auf den Profilkörper mit der stirnseitig angeordneten Kammer, diese Kammer zwischen zwei Dichtlippen liegt. Mithin ist gewährleistet, dass durch übliches Berühren der Türspaltabdichtung von außen mithin lediglich ein Berühren der Dichtlippen bzw. auch durch Wasser oder Schall ein Auslösen der Schaltleiste bzw. des Schaltgliedes nicht zu befürchten ist. Insbesondere um eine Abdichtung des Türprofiles gegen Spritzwasser zu bewirken, ist vorgesehen, dass die Dichtlippe zum Zentrum des Profilkörpers hin abgewinkelt ist.

Um die Verformbarkeit des Fingerschutzprofiles zu erreichen, ist das Fingerschutzprofil aus einem Elastomer, insbesondere einem Gummi, hergestellt. Die Fingerschutzprofile sind weiterhin zur erleichterten Montage in die Stirnseite der Tür bzw. des Rahmens einclipsbar.

Gegenstand der Erfindung ist ebenfalls eine weitere Türspaltabdichtung, die im Prinzip aus zwei identischen Fingerschutzprofilen besteht. Im Einzelnen zeigt dieses Fingerschutzprofil im Querschnitt eine in etwa L-förmige Ausgestaltung, wobei der eine auf die Türöffnung zugerichtete Schenkel die längsverlaufende Kammer zur Aufnahme des Schaltgliedes aufweist. Durch die auf die Türöffnung ausgerichtete Anordnung der Kammer an dem L-förmigen Fingerschutzprofil und die entsprechend gegensinnige Anordnung der beiden Fingerschutzprofile zur Bildung der Türspaltabdichtung wird erreicht, dass die beiden Kammern der Fingerschutzprofile seitlich versetzt zueinander liegen. Der Vorteil dieser Ausgestaltung besteht darin, dass allein auf Grund der L-Form des Fingerschutzprofiles und der damit einhergehenden versetzten Anordnung der Kammern außen und innen ein Ansprechen des Fingerschutzprofiles sowohl bei Druck von außen, als auch von innen gewährleistet ist.

Ein weiterer Vorteil dieser L-förmigen Ausgestaltung des Fingerschutzprofiles besteht darin, dass allein hierdurch eine gewisse Dichtwirkung gegen Spritzwasser besteht. Zusätzlich ist allerdings vorgesehen, dass das Fingerschutzprofil im Eckbereich eine nach außen weisende Dichtlippe aufweist; hieraus wird deutlich, dass im geschlossenen Zustand der Tür diese Dichtlippe an der Kammer des benachbarten Fingerschutzprofiles anliegt, und so eine erhöhte Dichtwirkung bewirkt. Die Ausgestaltung der Kammer, insbesondere im Hinblick der Schwenkbeweglichkeit in seitlicher Richtung, entweder durch die spezielle Ausgestaltung des Querschnitts der Kammer bzw. auch durch eine Materialschwächung im Bereich der seitlichen Wandung der Kammer ist identisch mit der Ausbildung der ersten Ausführungsform einer Türspaltabdichtung bzw. der dort beschriebenen Fingerschutzprofile.

Gleiches gilt in Bezug auf die Ausbildung des Schaltgliedes bzw. auf die Anordnung eines Noppens oder einer Druckleiste zur Betätigung des Schaltgliedes auf der Innenseite der Kammer. Weiterhin ist auch dieses Fingerschutzprofil gemäß der zweiten Ausführungsform aus einem Elastomer, z. B. Gummi, ausgebildet, und ist in die Stirnseite der Tür oder des Rahmens des Fahrzeuges einclipsbar.

Anhand der Zeichnungen werden die beiden Türspaltabdichtungen nachstehend beispielhaft näher erläutert.

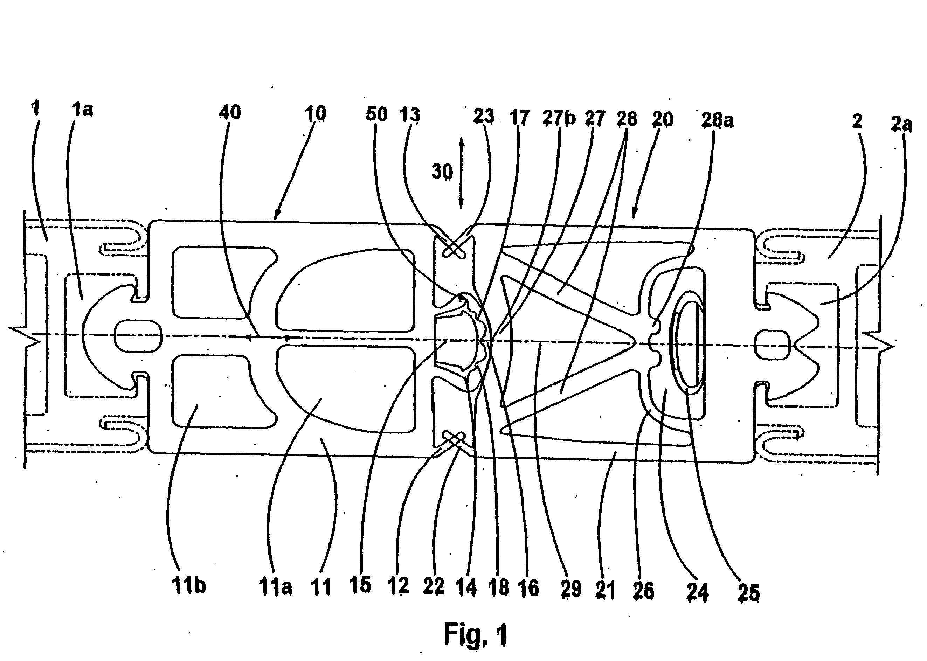

- Figur 1: zeigt die erste Ausführungsform der Türspaltabdichtung im Schnitt;

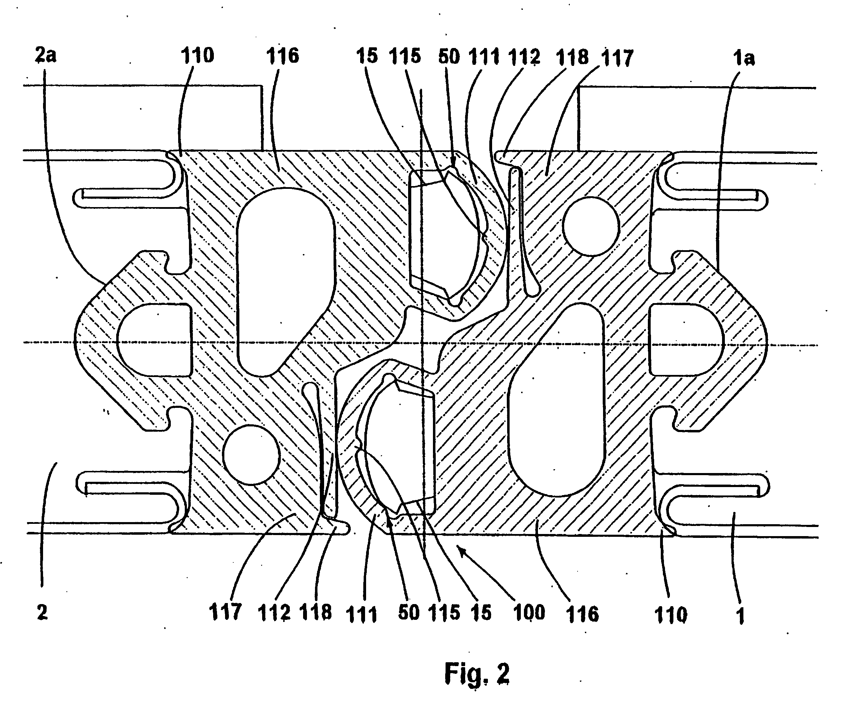

- Figur 2: zeigt die zweite Ausführungsform der Türspaltabdichtung im Schnitt.

Die Tür bwz. der Türrahmen, der das jeweilige Fingerschutzprofil 10, 20 der ersten Ausführungsform aufnimmt, ist jeweils mit 1, 2 bezeichnet. Die Tür bzw. der Rahmen 1, 2 besitzen eine T-Nut-förmige Aussparung 1 a, 2a zur einclipsbaren Aufnahme der die Türspaltabdichtung bildenden Fingerschutzprofile 10, 20.

Das Fingerschutzprofil 10 umfasst den eigentlichen Profilkörper 11 mit den stirnseitig seitlich angeordneten Dichtlippen 12, 13, die jeweils auf das Zentrum des Profilkörpers zu abgewinkelt sind. Zentrisch zwischen den beiden Dichtlippen 12, 13 befindet sich die Kammer 14, die die elektrische Schaltleiste 15 aufnimmt. Gebildet wird die Kammer 14 durch einen omegaförmigen Mantel. Ein solcher omegaförmiger Mantel zeichnet sich dadurch aus, dass die seitlichen Schenkel der Kammer in in den Profilkörper übergehenden Bereich aufeinander zulaufen. Hierdurch ist gewährleistet, dass die Kammer seitlich, und zwar in Richtung des Pfeiles 30 zu beiden Seiten schwenkbeweglich ausgebildet ist.

Der Mantel 16 der Kammer 14 zeigt auf seiner dem Schaltglied 15 zugwandten Seite zwei Druckleisten 17, 18 auf, die bei entsprechender Verformung Druck auf die Schaltleiste 15 ausüben. Um eine Verformung des Mantels 16 in Richtung des Pfeiles 40 zu erleichtern, ist vorgesehen, dass der Mantel 16 im Seitenbereich (Pfeil 50) eine Materialschwächung aufweist. Die Kammer 14 ist - wie bereits ausgeführt - Bestandteil des Profilkörpers 11, der in seinem Inneren mehrere Hohlräume 11a bzw. 11b aufweist, die schlussendlich auch eine Verformung des Profilköpers ermöglichen.

Das Fingerschutzprofil 20 zeigt ebenfalls einen Profilkörper 21 mit jeweils seitlich angeordeten Lippen 22 und 23. Diese Lippen 22 und 23 stehen an den benachbarten Lippen 12, 13 des benachbarten Profilkörpers 11 des Fingerschutzprofiles 10 an. Im Bereich der Kammer 14 bzw. des Mantels 16 der einen, ersten Profilleiste 10 weist die gegenüberliegende Profilleiste 20 eine Andruckfläche 27 auf, die eine Wölbung 27b zeigt, die der Außenkontur der Kammer 14 bzw. des Mantels 16 nachempfunden leicht nach innen gewölbt ausgebildet ist. Von der Andruckfläche 27 erstrecken sich zwei Stege 28 konisch aufeinander zulaufend in Richtung der Kammer 24 dieses zweiten Fingerschutzprofiles 20. Die Kammer 24, die die Schaltleiste 25 aufnimmt, besitzt einen Mantel 26, wobei die Enden 28a der Stege 28 bis in die Kammer 24 hineinragen.

Der durch die Stege 28 gebildete Hohlraum 29 kann durch einen Füllkörper ausgefüllt werden, der die Verformung der Stege 28 begrenzt, wenn Druck auf die Andruckfläche 27 ausgeübt wird.

Auch bei der zweiten Ausführungsform ist die Tür bzw. der Rahmen jeweils mit 1 und 2 bezeichnet, wobei der jeweilige Rahmen bzw. die Tür 1, 2 eine T-Nut-förmige Aussparung 1a, 2a zur einclipsbaren Aufnahme der die Türspaltabdichtung 100 bildenden Fingerschutzprofile 110 aufweist.

Die beiden die Türspaltabdichtung 100 bildenden Fingerschutzprofile 110 sind identisch. Ein solches Fingerschutzprofil 110, das mit einem Profilkörper im Querschnitt im Wesentlichen L-förmig ausgebildet ist, weist auf seiner Stirnseite, d. h. der Türöffnung zugewandten Seite die insgesamt mit 111 bezeichnete Kammer zur Aufnahme der elektrischen Schaltleiste 15 auf. Die Kammer 111 selbst zeigt darüber hinaus eine Druckleiste 115, deren Funktion in Bezug auf die Kammer 14 bereits beschrieben ist. Die Ausgestaltung der Kammer 111, insbesondere hinsichtlich ihrer schwenkbeweglichen Ausbildung in seitlicher Richtung ist ebenfalls in Bezug auf die erste Ausführungsform der Türspaltabdichtung beschrieben. Insofern wird hierauf Bezug genommen.

Das Fingerschutzprofil 110 ist - wie bereits erläutert - L-förmig ausgebildet. Die beiden das L bildenden Schenkel 116 und 117 des Fingerschutzprofiles 110 besitzen im Schenkelgrund eine schräg nach außen weisende Dichtlippe 112. Im geschlossenen Zustand der Türspaltabdichtung, d. h, dann wenn die beiden Fingerschutzprofile im Wesentlichen aneinanderliegen, liegt die Dichtlippe 112 des einen Fingerschutzprofiles 110 an der Kammer 111 des jeweils anderen Fingerschutzprofiles an. Die Ausbildung und Anordnung der Dichtlippe 112 ist hierbei jedoch so getroffen, dass in lediglich geschlossenem Zustand der Tür durch die Dichtlippe die Schaltleiste 15 in der Kammer 111 nicht betätigt wird. Im seitlichen Bereich an dem Schenkel 117 des Fingerschutzprofiles 110 befindet sich ein Vorsprung 118, der der zusätzlichen Abweisung gegen Spritzwasser von außen dient.

## Patentansprüche

1. Türspaltabdichtung, insbesondere für eine Fahrzeugtür, mit mindestens einem Fingerschutzprofil (10, 20; 110), wobei das Fingerschutzprofil (10, 20; 110) an der Stirnseite eine längsverlaufende Kammer (14; 111) und mindestens eine Dichtlippe (12, 13; 22, 23; 112) aufweist, wobei die Kammer (14; 111) über die Außenkontur des Profilkörpers (11) des Fingerschutzprofiles (10, 20; 110) und die mindestens eine Dichtlippe vorsteht, wobei in der Kammer (14; 111) ein Schaltglied (15) angeordnet ist.

2. Türspaltabdichtung nach Anspruch 1
**dadurch gekennzeichnet,**
**dass** das Fingerschutzprofil (110) im Querschnitt in etwa L-förmig ausgebildet ist, wobei der eine auf die Türöffnung zugerichtete Schenkel (116) die längsverlaufende Kammer (111) aufweist.

3. Türspaltabdichtung nach Anspruch 1 und 2,
**dadurch gekennzeichnet,**
**dass** die Kammer (14; 111) am Profilkörper (11) in seitlicher Richtung schwenkbeweglich angeordnet ist.

4. Türspaltabdichtung nach Anspruch 3,
**dadurch gekennzeichnet,**
**dass** die Kammer (14; 111) im Querschnitt nach Art eines Omegas ausgebildet ist.

5. Türspaltabdichtung nach Anspruch 1 und 2,
**dadurch gekennzeichnet,**
**dass** die Kammer (14; 111) auf Ihrer Innenseite mindestens einen Noppen oder eine Druckleiste (17, 18; 115) zur Betätigung des Schaltgliedes (15) aufweist.

6. Türspaltabdichtung nach Anspruch 1 und 2,
**dadurch gekennzeichnet,**
**dass** die Kammer (14; 111), um eine Deformation in Richtung auf den Profilkörper (11; 112) zu ermöglichen, im Bereich der seitlichen Wandung eine Materialschwächung (Pfeil 50) aufweist.

7. Türspaltabdichtung nach Anspruch 1,
**dadurch gekennzeichnet,**
**dass** die Türspaltabdichtung ein weiteres, dem ersten Fingerschutzprofil (10) gegenüberliegendes, zweites Fingerschutzprofil (20) aufweist, wobei dieses zweite Fingerschutzprofil (20) eine Andruckfläche (27) für die Kammer (14) des ersten Fingerschutzprofiles (10) aufweist.

8. Türspaltabdichtung nach Anspruch 7,
**dadurch gekennzeichnet,**
**dass** das zweite Fingerschutzprofil (20) eine zweite Kammer (24) zur Aufnahme eines zweiten Schaltgliedes (25) aufweist.

9. Türspaltabdichtung nach Anspruch 8,
**dadurch gekennzeichnet,**
**dass** von der Andruckfläche (27) auf die zweite Kammer (24) konisch zulaufend zwei Stege (28) vorgesehen sind.

10. Türspaltabdichtung nach Anspruch 9,
**dadurch gekennzeichnet,**
**dass** die Stegenden (28) bis in die zweite Kammer (24) hineinragen.

11. Türspaltabdichtung nach Anspruch 9,
**dadurch gekennzeichnet,**
**dass** durch die Stege (28) ein Hohlraum (29) gebildet wird, in den ein Füllkörper einsetzbar ist.

12. Türspaltabdichtung nach einem oder mehrerer der voranstehenden Ansprüche,
**dadurch gekennzeichnet,**
**dass** das Schaltglied (15, 25) als elektrische Schaltleiste ausgebildet ist.

13. Türspaltabdichtung nach Anspruch 12
**dadurch gekennzeichnet,**
**dass** die Schaltleiste (15, 25) sich parallel zur Längsachse der Kammer (14, 24; 111) erstreckt.

14. Türspaltabdichtung nach Anspruch 1 oder 8,
**dadurch gekennzeichnet,**
**dass** der Profilkörper (11, 21) stirnseitig seitlich angeordnet die mindestens eine Dichtlippe (12, 13; 22, 23) aufweist.

15. Türspaltabdichtung nach Anspruch 14,
**dadurch gekennzeichnet,**
**dass** die Kammer (14) zwischen der bzw. den Dichtlippen (12, 13) angeordnet ist.

16. Türspaltabdichtung nach Anspruch 14,
**dadurch gekennzeichnet,**
**dass** die Dichtlippe (12, 13; 22, 23) zum Zentrum des Profilkörpers (11, 21) hin abgewinkelt ist.

17. Türspaltabdichtung nach einem oder mehreren der voranstehenden Ansprüche,
**dadurch gekennzeichnet,**
**dass** das Fingerschutzprofil (10, 20; 110) aus einem Elastomer, z. B. Gummi, besteht.

18. Türspaltabdichtung nach einem oder mehreren der voranstehenden Ansprüche,
**dadurch gekennzeichnet,**
**dass** das Fingerschutzprofil (10, 20; 110) in die Stirnseite der Tür oder des Rahmens einclipsbar ist.

19. Türspaltabdichtung nach Anspruch 2,
**dadurch gekennzeichnet,**
**dass** die Türspaltabdichtung (100) durch zwei im Wesentlichen L-förmige Fingerschutzprofile (110) gebildet wird, wobei die beiden Kammern (111) seitlich versetzt zueinander liegen.

20. Türspaltabdichtung nach Anspruch 2,
**dadurch gekennzeichnet,**
**dass** das Fingerschutzprofil (110) im Eckbereich die nach außen weisende Dichtlippe (112) aufweist.

21. Türspaltabdichtung nach einem oder mehreren der voranstehenden Ansprüche,
**dadurch gekennzeichnet,**
**dass** die Dichtlippe (112) im geschlossenen Zustand der Tür (1, 2) an der Kammer (111) des benachbarten Fingerschutzprofiles (110) anliegt.

## Claims

1. A sealing device for a door, more specifically for a vehicle door, with at least one finger guard profile (10, 20; 110), said finger guard profile (10, 20; 110) being provided, on the end side thereof, with a longitudinally oriented chamber (14; 111) and with at least one sealing lip (12, 13; 22, 23; 112), said chamber (14; 111) protruding beyond the outer contour of the profiled body (11) of the finger guard profile (10, 20; 110) and the at least one sealing lip, a switch member (15) being disposed within said chamber (14; 111).

2. The sealing device for a door according to claim 1,
**characterized in that**
the finger guard profile (110) defines an approximately "L" shaped cross-section, the one leg (116) thereof, which is pointed toward the door cutout, comprising the longitudinally oriented chamber (111).

3. The sealing device for a door according to claim 1 and 2,
**characterized in that**
the chamber (14; 111) is mounted to the profiled body (11) so as to be pivotally movable in a lateral direction.

4. The sealing device for a door according to claim 3,
**characterized in that**
the chamber (14; 111) is .OMEGA.-shaped in cross-section.

5. The sealing device for a door according to claim 1 and 2,
**characterized in that,**
on its inner side, the chamber (14; 111) has at least one button or push bar (17, 18; 115) for actuating the switch member (15).

6. The sealing device for a door according to claim 1 and 2,
**characterized in that,**
in the region of the side wall, the chamber (14; 111) has a material weakening (arrow 50) in order to allow deformation thereof toward the profiled body (11; 112).

7. The sealing device for a door according to claim 1,
**characterized in that**
the sealing device for the door has another, second finger guard profile (20) located opposite the first finger guard profile (10), said second finger guard profile (20) having a contact pressure surface (27) for the chamber (14) of the first finger guard profile (10).

8. The sealing device for a door according to claim 7,
**characterized in that**
the second finger guard profile (20) has a second chamber (24) for receiving a second switch member (25).

9. The sealing device for a door according to claim 8,
**characterized in that**
two crosspieces (28) are provided, said crosspieces extending diagonally from the contact pressure surface (27) to the second chamber (24) so as to form a cone therein between.

10. The sealing device for a door according to claim 9,
**characterized in that**
the ends of the crosspieces (28) protrude into the second chamber (24).

11. The sealing device for a door according to claim 9,
**characterized in that**
the crosspieces (28) define a hollow space (29) into which a filler body is insertable.

12. The sealing device for a door according to one or several of the afore mentioned claims,
**characterized in that**
the switch member (15, 25) is conformed to be an electrical switch bar.

13. The sealing device for a door according to claim 12,
**characterized in that**
the switch bar (15, 25) extends parallel to the longitudinal axis of the chamber (14, 24; 111).

14. The sealing device for a door according to claim 1 or 8,
**characterized in that**
the profiled body (11, 21) has at least one sealing lip (12, 13; 22, 23) which is disposed laterally on the end side thereof.

15. The sealing device for a door according to claim 14,
**characterized in that**
the chamber (14) is disposed between the sealing lip(s) (12, 13).

16. The sealing device for a door according to claim 14,
**characterized in that**
the sealing lip (12, 13; 22, 23) is angled toward the center of the profiled body (11, 21).

17. The sealing device for a door according to one or several of the afore mentioned claims,
**characterized in that**
the finger guard profile (10, 20; 110) is made of an elastomer e.g., rubber.

18. The sealing device for a door according to one or several of the afore mentioned claims,
**characterized in that**
the finger guard profile (10, 20; 110) is clippable into the end side of the door or frame.

19. The sealing device for a door according to claim 2,
**characterized in that**
the sealing device for a door (100) is formed from two substantially "L" shaped finger guard profiles (110), the two chambers (111) being laterally offset relative to each other.

20. The seating device for a door according to claim 2,
**characterized in that**
the finger guard profile (110) is provided, in the corner region thereof, with the outwardly pointed sealing lip (112).

21. The sealing device for a door according to one or several of the afore mentioned claims,
**characterized in that**
the sealing lip (112) fits against the chamber (111) of the neighbouring finger guard profile (110) in the closed condition of the door (1, 2).

## Revendications

1. Joint d'étanchéité d'une porte, notamment d'une porte de véhicule, comportant au moins un profilé anti-pince doigts (10, 20 ; 110), ledit profilé anti-pince doigts (10, 20 ; 110) comportant sur sa face frontale une chambre (14 ; 111) orientée longitudinalement et au moins une lèvre d'étanchéité (12, 13 ; 22, 23 ; 112), ladite chambre (14 ; 111) débordant le contour extérieur du corps profilé (11) du profilé anti-pince doigts (10, 20 ; 110) et l'au moins une lèvre d'étanchéité, un élément de commutation (15) étant disposé dans la chambre (14 ; 111).

2. Joint d'étanchéité d'une porte selon la revendication 1,
**caractérisé en ce que**
le profilé anti-pince doigts (110) a une section en forme approximative de L, la branche (116) pointée vers la baie comportant la chambre (111) orientée longitudinalement.

3. Joint d'étanchéité d'une porte selon les revendications 1 et 2,
**caractérisé en ce que**
la chambre (14; 111) est montée mobile en pivotement suivant une direction latérale sur le corps profilé (11).

4. Joint d'étanchéité d'une porte selon la revendication 3,
**caractérisé en ce que**
la chambre (14; 111) a une section en oméga.

5. Joint d'étanchéité d'une porte selon les revendications 1 et 2,
**caractérisé en ce que**
la chambre (14; 111) comporte, sur sa face intérieure, au moins un bouton ou barre de pression (17, 18 ; 115) pour actionner l'élément de commutation (15).

6. Joint d'étanchéité d'une porte selon les revendications 1 et 2,
**caractérisé en ce que**
la chambre (14; 111) comporte un affaiblissement de la matière (flèche 50) au niveau de sa paroi latérale afin de permettre la déformation en direction du corps profilé (11 ; 112).

7. Joint d'étanchéité d'une porte selon la revendication 1,
**caractérisé en ce que**
le joint d'étanchéité de porte comporte un deuxième profilé anti-pince doigts (20) situé en face du premier profilé anti-pince doigts (10), ledit deuxième profilé anti-pince doigts (20) comportant une surface de pression (27) pour la chambre (14) du premier profilé anti-pince doigts (10).

8. Joint d'étanchéité d'une porte selon la revendication 7,
**caractérisé en ce que**
le deuxième profilé anti-pince doigts (20) comporte une deuxième chambre (24) destinée à recevoir un deuxième élément de commutation (25).

9. Joint d'étanchéité d'une porte selon la revendication 8,
**caractérisé en ce que**
deux talons (28) qui s'étendent selon une forme conique depuis la surface de pression (27) jusqu'à la deuxième chambre (24) sont prévus.

10. Joint d'étanchéité d'une porte selon la revendication 9,
**caractérisé en ce que**
les extrémités des talons (28) font saillie vers l'intérieur de la deuxième chambre (24).

11. Joint d'étanchéité d'une porte selon la revendication 9,
**caractérisé en ce que**
les talons (28) forment une cavité (29) dans laquelle est apte à venir s'insérer un corps de remplissage.

12. Joint d'étanchéité selon une ou plusieurs des revendications précédentes,
**caractérisé en ce que**
l'élément de commutation (15, 25) est conformé en forme de barre de commutation électrique.

13. Joint d'étanchéité d'une porte selon la revendication 12,
**caractérisé en ce que**
la barre de commutation (15, 25) est parallèle à l'axe longitudinal de la chambre (14, 24 ; 111).

14. Joint d'étanchéité d'une porte selon la revendication 1 ou 8,
**caractérisé en ce que**
le corps profilé (11, 21) comporte sur sa face frontale l'au moins une lèvre d'étanchéité (12, 13 ; 22, 23) disposée sur le côté.

15. Joint d'étanchéité d'une porte selon la revendication 14,
**caractérisé en ce que**
la chambre (14) est disposée entre la ou les lèvres d'étanchéité (12, 13).

16. Joint d'étanchéité d'une porte selon la revendication 14,
**caractérisé en ce que**
la lèvre d'étanchéité (12, 13; 22, 23) est coudée vers le centre du corps profilé (11, 21).

17. Joint d'étanchéité selon une ou plusieurs des revendications précédentes,
**caractérisé en ce que**
le profilé anti-pince doigts (10, 20; 110) est réalisé en un élastomère, p. ex. en caoutchouc.

18. Joint d'étanchéité selon une ou plusieurs des revendications précédentes,
**caractérisé en ce que**
le profilé anti-pince doigts (10, 20; 110) est apte à être encliqueté dans la face frontale de l'ouvrant ou du dormant.

19. Joint d'étanchéité d'une porte selon la revendication 2,
**caractérisé en ce que**
le joint d'étanchéité de porte (100) est formé par deux profilés anti-pince doigts (110) sensiblement en forme de L, les deux chambres (111) étant décalées latéralement l'une par rapport à l'autre.

20. Joint d'étanchéité d'une porte selon la revendication 2,
**caractérisé en ce que**
le profilé anti-pince doigts (110) comporte, à la hauteur du coin, la lèvre d'étanchéité (112) dirigée vers l'extérieur.

21. Joint d'étanchéité selon une ou plusieurs des revendications précédentes,
**caractérisé en ce que**
la lèvre d'étanchéité (112) est en appui contre la chambre (111) du profilé anti-pince doigts (110) voisin quand la porte (1, 2) est fermée.
